# DEMANDE DE BREVET EUROPEEN

(11) **EP 1 935 709 A2**
(43) Date de publication de la demande: **25.06.2008**
(21) Numéro de dépôt: 07301659.4
(22) Date de dépôt: 11.12.2007
(51) Int. Cl.: B60N 2/30, B60N 2/02

(54) **Dispositif de déverrouillage du dossier d'un siège de véhicule automobile à commande de repliement électrique**

(30) Priorité: 22.12.2006 FR 0655907
(71) Demandeur: PEUGEOT CITROËN AUTOMOBILES S.A., 78140 Vélizy Villacoublay (FR)
(72) Inventeur: Gomes, Antonio, 78560 Le Port Marly (FR)

(57) **Abrégé**

Dispositif de déverrouillage d'un siège arrière (1) comportant une assise (2) et un dossier (3) constitué d'un plateau (5) articulé autour d'un premier axe transversal (6) et d'un flasque (4) de support du plateau, monté à rotation sous l'effet d'un moteur électrique (20) autour d'un second axe transversal (8) et comportant des moyens d'immobilisation débrayables (7) pour le redressement automatique du dossier (3) dans une position maximale dirigée vers l'avant, ces moyens coopérant avec un levier de déverrouillage (11),
caractérisé en ce que le levier (11) entraîne dans son mouvement de rotation vis-à-vis du flasque un levier coudé (23) dont le déplacement libère un doigt de commande (21), solidaire du plateau (5), ce doigt (21) décrivant une rainure circulaire (22) ménagée dans le flasque (4) lorsque le plateau pivote autour du premier axe (6) pour être rabattu sur l'assise (2), avant que le levier coudé (23) ne bloque le doigt dans la rainure après rabattement du dossier.

## Description

La présente invention est relative à un dispositif de déverrouillage du dossier d'un siège de véhicule automobile, permettent de réaliser son pivotement autour d'un axe transversal à l'aide d'un effort exercé sur ce dossier par un moteur d'entraînement réversible afin notamment de le rabattre sur l'assise du siège pour atteindre une position dans laquelle il est étroitement appliqué sur celle-ci, de telle sorte que le basculement ultérieur de ce siège avec le dossier ainsi replié, puisse permettre d'assurer son escamotage complet dans une fosse ou cuvette prévue dans le plancher de l'habitacle de ce véhicule.

Dans certains véhicules automobiles, les sièges arrière disposés généralement selon deux rangées successives, sont parfois susceptibles d'être totalement escamotés dans des cuvettes de réception prévues dans le plancher de l'habitacle afin de libérer entièrement l'espace disponible derrière le siège avant jusqu'à la porte du hayon arrière.

Cet escamotage du siège après repliement de son dossier sur l'assise, est généralement désigné par l'expression de « mise en tablette ».

Les sièges du véhicule peuvent par ailleurs, lorsqu'ils sont en position d'utilisation normale, présenter la faculté de pouvoir modifier l'orientation relative de leur dossier par rapport à l'assise pour accroître le confort de l'usager qui peut ainsi, dans une limite donnée, incliner légèrement ce dossier vers l'arrière, en le faisant pivoter autour d'un axe qui est parallèle mais distinct de celui autour duquel s'effectue le rabattement du dossier avant la mise en tablette du siège.

Or, si le dossier n'est pas totalement relevé autour de l'axe correspondant et verrouillé dans cette position vis-à-vis de l'assise avant qu'il ne soit rabattu sur celle-ci, on conçoit que son basculement ne permettra pas de réaliser une mise en tablette convenable et en particulier d'obtenir, après escamotage dans le plancher de l'habitacle, une surface parfaitement plane.

De plus, en l'absence de verrouillage, le dossier du siège pourra le cas échéant se déplacer intempestivement et notamment se déployer de façon plus ou moins importante dans l'habitacle, de manière non commandée.

La présente invention a pour objet un dispositif qui permet, dans la continuité du mouvement, préalablement à la mise en tablette d'un siège et à son basculement pour l'amener dans une cuvette de réception prévue dans le plancher du véhicule, d'assurer automatiquement le relèvement du dossier autour d'un axe de pivotement pour l'amener dans une position d'avancée maximale, sensiblement verticale, dans laquelle il peut être verrouillé, avant que ce dossier ne soit rabattu au moyen du moteur électrique d'entraînement contre l'assise autour d'un autre axe de pivotement, parallèle au premier.

A cet effet, le dispositif considéré, pour un siège arrière de véhicule automobile comportant une assise et un dossier constitué d'un plateau d'appui dorsal, articulé autour d'un premier axe transversal permettant de rabattre ce plateau sur l'assise au moyen d'un moteur électrique d'entraînement agissant sur ce premier axe pour faire pivoter le dossier, et d'un flasque de support du plateau, ce flasque étant lui-même monté à rotation autour d'un second axe transversal, parallèle au premier, porté par l'assise de manière à permettre de modifier l'orientation relative du dossier par rapport à la verticale pour augmenter le confort de l'usager, le flasque de support comportant des moyens d'immobilisation débrayables pour le redressement automatique du dossier dans une position maximale dirigée vers l'avant, ces moyens coopérant avec un levier de déverrouillage automatique articulé sur le flasque et apte à être actionné par l'usager, se caractérise en ce que le flasque comporte une rainure circulaire recevant un doigt de commande solidaire du plateau d'appui dorsal du dossier qui décrit cette rainure lorsque le plateau entraîné par le moteur électrique pivote autour du premier axe pour être rabattu sur l'assise, et un levier coudé également articulé sur le flasque, agencé pour d'abord pivoter vers l'arrière sous la poussée du doigt de commande au cours de son déplacement dans la rainure en agissant sur les moyens débrayables pour le redressement du dossier dans sa position maximale autour du second axe de manière, dans un premier temps, à libérer ces moyens débrayables pour autoriser le retour en position maximale vers l'avant du dossier, le levier coudé pivotant ensuite vers l'avant avec le dossier pour se disposer dans un second temps sous le doigt de commande dans sa rainure afin d'immobiliser celui-ci et de maintenir le dossier en position rabattue.

Selon une autre caractéristique, le flasque est soumis en permanence à un effort de poussée vers sa position maximale dirigée vers l'avant à l'encontre des moyens débrayables, exercé par une barre de torsion comportant une tige d'actionnement dont une extrémité est solidarisée de l'assise et dont l'autre extrémité est en prise avec l'arrière du dossier pour assurer son redressement autour du second axe.

Selon encore une autre caractéristique, le levier de déverrouillage et le levier coudé sont articulés sur le flasque autour du même axe de pivotement.

Avantageusement, le levier de déverrouillage entraîne dans sa rotation un loquet de commande des moyens débrayables, relié au levier par l'intermédiaire d'un téton engagé dans un oeillet du loquet.

Notamment et dans un mode de réalisation particulier, non exclusif, le déplacement du loquet de commande provoqué par le levier de déverrouillage, assure dans les moyens débrayables le désengagement d'au moins un secteur cranté ou similaire en prise avec une couronne dentée de maintien, afin de libérer le dossier en rotation autour du second axe et d'assurer son redressement dans sa position maximale vers l'avant.

Dans un mode de réalisation préféré, le levier de déverrouillage présente un profil arrondi, propre à contourner dans son mouvement de pivotement sur le flasque la rainure circulaire et à éviter qu'il n'interfère mécaniquement avec le doigt de commande.

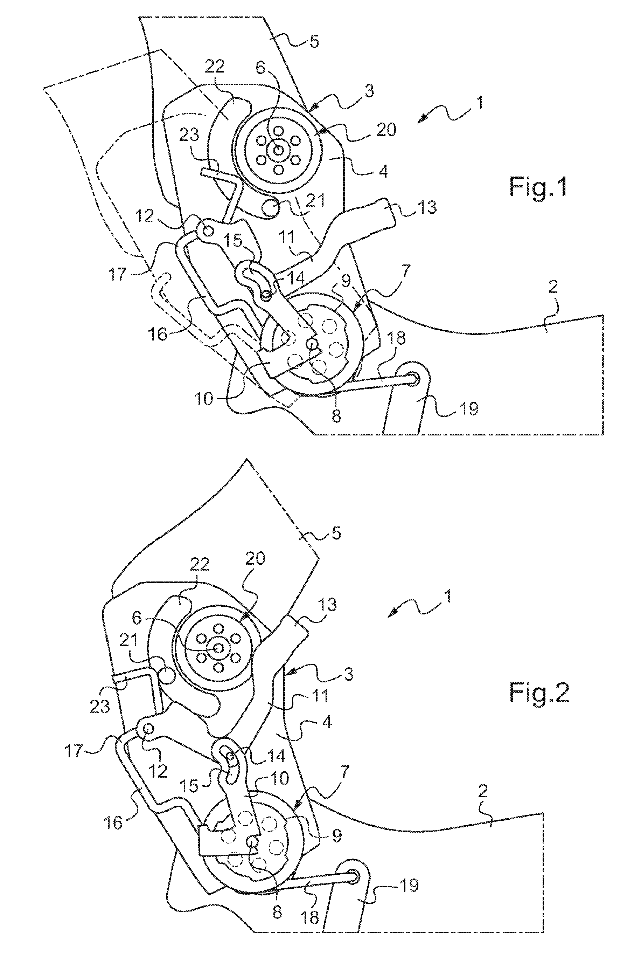

D'autres caractéristiques d'un dispositif conforme à l'invention apparaîtront encore à travers la description qui suit d'un exemple de réalisation, donné à titre indicatif et non limitatif en référence au dessin annexé sur lequel les Figures 1 à 3 sont des vues partielles en élévation du dispositif conforme à l'invention, pour le déverrouillage d'un siège arrière de véhicule automobile, permettant de réaliser sa mise en tablette par rabattement et blocage en position du dossier de ce siège sur son assise, illustré au cours de diverses phases successives de mise en oeuvre de ce rabattement.

Sur ces figures, la référence 1 désigne schématiquement et de façon générale un siège arrière pour véhicule automobile, muni notamment de moyens conformes à l'invention, permettant, une fois le dossier du siège rabattu et appliqué fermement contre son assise d'être ensuite basculé autour d'un point de pivotement lié à cette dernière afin d'escamoter totalement le siège dans une cuvette ou une fosse prévue à cet effet dans le plancher du véhicule en réalisant ce qu'il est convenu d'appeler une mise en tablette.

Les dispositions structurelles et fonctionnelles qui permettent notamment d'introduire et de maintenir en position le siège dans la cuvette de réception ne sont pas représentées sur les figures, ne faisant pas partie en elles-mêmes de l'invention.

Le siège 1 comporte principalement une assise 2 et un dossier 3, ces organes qui constituent principalement le siège étant entourés d'une garniture de protection, également non représentée pour ne pas surcharger le dessin et permettre de mieux comprendre les caractéristiques propres de l'invention ainsi que la nature et le rôle des divers éléments du mécanisme qui permettent d'en assurer la mise en oeuvre.

L'invention s'applique plus particulièrement à un siège dont le dossier 3 est constitué d'un flasque 4 et d'un plateau d'appui dorsal 5, articulés l'un à l'autre autour d'un premier axe transversal 6, le pivotement du plateau 5 vis-à-vis du flasque étant réalisé de la manière qui sera décrite plus loin.

Le dossier 3, ainsi formé du flasque 4 et du plateau 5, est associé à des moyens débrayables 7, constitués à l'aide d'un ensemble articulé avec le dossier 3 sur l'assise 2 autour d'un second axe transversal 8, parallèle à l'axe 6 mais disposé à la partie inférieure du flasque 4, ces moyens débrayables étant conçus de telle sorte qu'ils permettent de modifier l'orientation relative du dossier 3 par rapport à une position initiale sensiblement verticale afin d'accroître à la demande de l'usager le confort de celui-ci, le dossier 3 pouvant ainsi, comme schématisé en traits mixtes sur la Figure 1, occuper une position inclinée vers l'arrière variable, généralement jusqu'à 10 ou 15°, ces valeurs n'étant toutefois données qu'à titre purement indicatif.

La réalisation particulière des moyens débrayables 7, en eux-mêmes classiques et mis en oeuvre sur de nombreux modèles de véhicules, n'importe pas directement à l'invention de sorte qu'il n'est pas nécessaire de les décrire ici de façon détaillée, ces moyens pouvant par exemple être du genre de ceux décrits dans le brevet allemand DE 32 11158 ou dans le brevet européen EP 0 023 863.

Notamment, ces moyens peuvent comporter une couronne crantée 9, pivotant autour du second axe 8 avec le dossier 3, cette couronne étant adaptée à coopérer, selon des secteurs dentés successifs de celle-ci, en fonction du basculement imposé au dossier 3, avec une crémaillère ou pièce analogue (non représentée) de blocage en position, actionnée par la manoeuvre d'un loquet 10 permettant notamment de faire tourner la couronne pas à pas.

La manoeuvre du loquet 10 s'effectue à l'aide d'un levier 11, monté pivotant sur le flasque 4 autour d'un axe 12 et prolongé par une poignée de manoeuvre 13 que l'usager, assis sur le siège, peut lui-même manoeuvrer lorsqu'il souhaite faire varier l'inclinaison du dossier 3, en débloquant la couronne dentée et en exerçant un effort sur le dossier 3 avec son dos jusqu'à atteindre l'angle de basculement souhaité.

Dans ce but, le levier 11 comporte un téton 14 engagé dans un oeillet 15 du loquet 10, le profil de cet oeillet étant tel qu'il autorise le basculement vers le haut du levier autour de son axe 12 en exerçant sur le loquet un effort de relèvement transmis aux moyens débrayables 7 pour libérer momentanément ceux-ci. Le relâchement du levier 11 permet au loquet 10 de revenir en position initiale et de bloquer à nouveau le dossier 3 dans la position atteinte au moment de ce relâchement.

Une barre de torsion 16 est montée entre l'assise 2 et le dossier 3 pour exercer en permanence sur ce dernier un effort de poussée vers l'avant tendant, lorsque les moyens débrayables 7 sont mis hors service par le levier 11, à ramener ce dossier vers une position maximale vers l'avant, dans laquelle il occupe la position sensiblement verticale qui est la sienne lorsque le dossier n'est pas incliné vers l'arrière de la manière précisée ci-dessus.

A cet effet, la barre de torsion 16 comporte une extrémité 17 en prise avec l'arrière du dossier 3, l'extrémité opposée 18 de la barre étant reliée à une patte de fixation 19 solidaire de l'assise 2.

Le plateau d'appui dorsal 5 du dossier 3, articulé sur le flasque 4 autour du premier axe transversal 6, est associé à un moteur électrique 20, susceptible de l'entraîner autour de cet axe de manière à pouvoir le basculer en direction de l'assise 2 pour la mise en tablette du siège, ou inversement pour le redresser vers sa position initiale après que les moyens débrayables 7 aient été eux-mêmes actionnés pour disposer le dossier dans sa position maximale vers l'avant de la manière précisée plus haut.

Selon l'invention, le plateau 5 est solidaire d'un doigt de commande 21, apte à se déplacer dans une rainure circulaire 22 dont le centre coïncide avec l'axe transversal 6.

En outre, l'axe 12 autour duquel pivote le levier de déverrouillage 11 lorsqu'il est entraîné vers le haut par la poignée 13, comporte un levier coudé 23, solidaire du levier et fixé à celui-ci de manière à pouvoir pivoter avec lui autour de l'axe 12.

Avantageusement, le levier de déverrouillage 11 présente dans sa partie médiane, entre son axe de pivotement 12 et sa poignée de manoeuvre 13, un profil arrondi, lui permettant de contourner convenablement la rainure circulaire 22 lors de son relèvement par l'usager, en évitant qu'il n'interfère mécaniquement avec le doigt de commande 21 et en permettant à celui-ci de décrire cette rainure lorsqu'il n'y est pas immobilisé par le levier coudé 23, c'est-à-dire lorsque ce dernier est convenablement déporté vis-à-vis de cette rainure.

En effet, le levier coudé 23 s'étend en travers de cette rainure circulaire 22 lorsque le levier de déverrouillage 11 n'est pas actionné, bloquant en position au fond de celle-ci le doigt de commande 21. En revanche, lorsque ce levier de déverrouillage 11 est relevé, comme on le voit sur la Figure 2, le levier coudé 23 est déporté vers l'arrière du dossier et dégage totalement la rainure 22.

On comprend dans ces conditions que, dans cette dernière position, le doigt de commande 21 peut librement se déplacer dans la rainure 22, en particulier lorsque le plateau 5 du dossier 3 est rabattu autour de l'axe 6 en direction de l'assise 2, par commande du moteur électrique 20.

Le fonctionnement du dispositif conforme à l'invention se déduit des explications qui précèdent.

Initialement, le dossier 3 du siège 1 est dans une position donnée, sensiblement verticale par rapport à l'assise 2 ou plus ou moins inclinée vers l'arrière en fonction de l'angle souhaité par l'usager pour améliorer son confort.

A partir de cette position, en vue de réaliser la mise en tablette du dossier, la manoeuvre consiste, dans un premier temps, à exercer une action de relèvement sur le levier de déverrouillage 11 autour de son axe 12 par sa poignée de manoeuvre 13, de telle sorte que son téton 14 décrive l'oeillet 15 du loquet 10 et agisse par celui-ci sur les moyens débrayables 7 qui libèrent le dossier 3.

La barre de torsion 16 provoque instantanément un effort de rappel sur ce dernier, qui le ramène dès lors dans sa position maximale vers l'avant, en le faisant pivoter autour du second axe transversal 8.

Simultanément, le relèvement du levier de déverrouillage 11 provoque le déplacement du levier coudé 23 qui pivote avec lui autour de son axe 12, en libérant le passage pour le doigt de commande 21 dans la rainure circulaire 22.

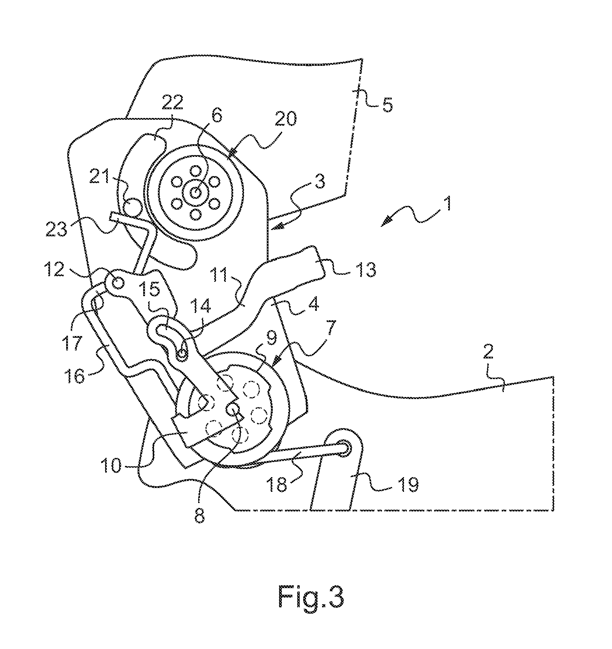

Dans un second temps, on commande le moteur électrique 20 pour faire basculer le plateau dorsal 5 autour du premier axe transversal 6 jusqu'à ce que ce plateau soit amené sensiblement parallèle à l'assise 2 en étant appliqué au plus près de celle-ci, comme illustré en séquence sur les Figures 2 et 3.

Le relâchement final du levier de déverrouillage 11, revenant dans la position illustrée sur la Figure 3 sous l'effet d'un élément à ressort (non représenté) agissant sur ce levier, permet au levier coudé 23 de revenir à nouveau dans sa position initiale où cette fois il se situe en dessous du doigt de commande 21.

Dans celle-ci, le doigt 21 est immobilisé par le levier 23 de sorte que le plateau 5 ne peut plus être relevé, bloquant alors le dossier en l'empêchant de revenir dans sa position initiale, le plateau d'appui dorsal 5 restant appliqué sur l'assise 2 dans la situation correspondante dite de mise en tablette, sans possibilité de relèvement non commandé, aussi longtemps qu'une nouvelle action sur le levier 11 n'est pas exercée.

On réalise ainsi un dispositif simple qui permet, par l'action du seul levier pivotant qui provoque l'inclinaison à la demande du dossier vers l'arrière pour améliorer le confort de l'usager, d'autoriser, après remise en position maximale vers l'avant de ce dossier, le pivotement commandé électriquement du plateau vis-à-vis du flasque en direction de l'assise et, en fin de mouvement, de le bloquer automatiquement de telle sorte que, une fois le siège replié escamoté sous le plancher, le dossier ne puisse se relever de façon non commandée.

Bien entendu, il va de soi que l'invention ne se limite pas à l'exemple de réalisation plus spécialement décrit et représenté en référence aux dessins annexés ; elle en embrasse au contraire toutes les variantes.

## Revendications

1. - Dispositif de déverrouillage du dossier d'un siège arrière (1) de véhicule automobile à commande de repliement électrique, comportant une assise (2) et un dossier (3) constitué d'un plateau d'appui dorsal (5), articulé autour d'un premier axe transversal (6) permettant de rabattre ce plateau sur l'assise au moyen d'un moteur électrique d'entraînement (20) agissant sur ce premier axe pour faire pivoter le dossier et d'un flasque de support (4) du plateau (5), ce flasque étant lui-même monté à rotation autour d'un second axe transversal (8), parallèle au premier, porté par l'assise de manière à permettre de modifier l'orientation relative du dossier par rapport à la verticale pour augmenter le confort de l'usager, le flasque de support comportant des moyens d'immobilisation débrayables (7) pour le redressement automatique du dossier (3) dans une position maximale dirigée vers l'avant, ces moyens coopérant avec un levier de déverrouillage automatique (11) articulé sur le flasque (4) et apte à être actionné par l'usager, **caractérisé en ce que** le flasque (4) comporte une rainure circulaire (22) recevant un doigt de commande (21) solidaire du plateau d'appui dorsal (5) du dossier (3) qui décrit cette rainure lorsque le plateau entraîné par le moteur électrique (20) pivote autour du premier axe (6) pour être rabattu sur l'assise (2), et un levier coudé (23) également articulé sur le flasque (4), agencé pour d'abord pivoter vers l'arrière sous la poussée du doigt de commande (21) au cours de son déplacement dans la rainure en agissant sur les moyens débrayables (7) pour le redressement du dossier (3) dans sa position maximale autour du second axe de manière, dans un premier temps, à libérer les moyens débrayables (7) pour autoriser le retour en position maximale vers l'avant du dossier, le levier coudé (23) pivotant ensuite vers l'avant avec le dossier (3) pour se disposer dans un second temps sous le doigt de commande (21) dans sa rainure (22) afin d'immobiliser celui-ci et de maintenir le dossier (3) en position rabattue.

2. - Dispositif selon la revendication 1, **caractérisé en ce que** le flasque (4) est soumis en permanence à un effort de poussée vers sa position maximale dirigée vers l'avant à l'encontre des moyens débrayables (7), exercé par une barre de torsion (16) comportant une tige d'actionnement dont une extrémité (18) est solidarisée de l'assise (2) et dont l'autre extrémité (17) est en prise avec l'arrière du dossier (3) pour assurer son redressement autour du second axe (8).

3. - Dispositif selon l'une des revendications 1 ou 2, **caractérisé en ce que** le levier de déverrouillage automatique (11) et le levier coudé (23) sont articulés sur le flasque (4) autour du même axe de pivotement (12).

4. - Dispositif selon l'une quelconque des revendications 1 à 3, **caractérisé en ce que** le déplacement du loquet de commande (10) provoqué par le levier de déverrouillage (11), assure dans les moyens débrayables (7) le désengagement d'au moins un secteur cranté ou similaire en prise avec une couronne dentée de maintien, afin de libérer le dossier (3) en rotation autour du second axe (8) et d'assurer son redressement dans sa position maximale vers l'avant.

5. - Dispositif selon l'une quelconque des revendications 1 à 4, **caractérisé en ce que** le levier de déverrouillage (11) présente un profil arrondi, propre à contourner dans son mouvement de pivotement sur le flasque (4) la rainure circulaire (22) et à éviter qu'il n'interfère mécaniquement avec le doigt de commande (21).
